# EUROPEAN PATENT SPECIFICATION

(11) **EP 3 200 310 B1**
(45) Date of publication and mention of the grant of the patent: **03.07.2019**
(21) Application number: 15844310.1
(22) Date of filing: 25.08.2015
(51) Int. Cl.: H02J 7/00, H01M 10/44, H02J 7/02, B60L 58/10

(54) **ELECTRICAL STORAGE SYSTEM, CONTROL APPARATUS, AND CONTROL METHOD**
ELEKTRISCHES SPEICHERSYSTEM, STEUERUNGSVORRICHTUNG UND STEUERUNGSVERFAHREN
SYSTÈME DE STOCKAGE D'ÉLECTRICITÉ, APPAREIL DE COMMANDE, ET PROCÉDÉ DE COMMANDE

(30) Priority: 26.09.2014 JP 2014196966
(43) Date of publication of application: 02.08.2017
(73) Proprietor: Panasonic Intellectual Property Management Co., Ltd., Osaka-shi, Osaka 540-6207 (JP)
(72) Inventor: TERAMOTO, Yuichiro, Osaka-shi Osaka 540-6207 (JP); YOSHITAKE, Akira, Osaka-shi Osaka 540-6207 (JP); KUWATA, Kaihei, Osaka-shi Osaka 540-6207 (JP); OTSUKI, Yosuke, Osaka-shi Osaka 540-6207 (JP); YOSHIMATSU, Takahiro, Osaka-shi Osaka 540-6207 (JP)
(74) Representative: Appelt, Christian W.
(86) International application number: PCT/JP2015/004267
(87) International publication number: WO 2016/047040

(56) References cited:
- WO-A1-2014/059050
- JP-A- 2007 325 451
- JP-A- 2011 113 759
- JP-A- 2013 101 831
- US-A1- 2014 285 022

## Description

### [TECHNICAL FIELD]

The present invention relates to an electricity storage system including a plurality of battery modules and to a control device and a control method used in the electricity storage system.

### [BACKGROUND ART]

An electricity storage system using a storage battery in which a plurality of battery modules are connected in series or parallel is known. In this case, each of the battery modules includes a plurality of battery cells and a battery control device, which collects the information of each battery cell. WO 2013/145000 A1 shows electricity storage systems which include a technique that controls the signals balancing the battery modules, charge/discharge voltages, and charge/discharge currents based on the information from the individual battery modules.

WO 2014/059050 A1 discloses a system of replaceable and configurable battery power modules (BPMs) operatively connected to a smart management module (SMM) . Each BPM can include a plurality of battery cells (e.g., Lithium) wired together in series and/or parallel. The BPMS are independently capable of cell balancing, monitoring and recording critical information about cell performance. The BPMs, wired together in series and/or parallel are connected to the SM M to form a cumulative battery pack. The performance and control limit information from each BPM can be used by the SMM to properly control the charging and discharging of the complete battery pack.

US 2014/0285022 A1 relates to an uninterrupted power supply system that incorporates a plurality of lithium batteries as a back-up power supply to an AC power supply. In the event that there is an interruption in the AC power supply, a power output switch is automatically activated by a power control system to draw power from a lithium battery pack. A battery pack is monitored by a battery management system that is coupled to battery monitoring modules couple to each battery. The battery management system may be configured to monitor the voltage and/or temperature of each battery. In another embodiment, an uninterrupted power supply system comprises a battery unit balancing system that maintains each battery within a battery unit below a threshold voltage value. A charging circuit and discharging circuit is used to maintain the batteries in a ready state of charge when not being used for the output power.

### [SUMMARY OF INVENTION]

### [PROBLEM TO BE SOLVED BY THE INVENTION]

In some cases, conventional electricity storage systems fix the characteristics of the storage batteries, which serve as control targets, and are not optimized for controlling the storage batteries having the characteristics thereof. However, in a case in which one storage battery is formed by combining a plurality of battery modules, the characteristics as a whole storage battery may be changed depending on the connection form of the battery modules. Moreover, if the characteristics of the individual storage battery modules per se are different even in a case in which the connection form of the battery modules is the same, the characteristics as the whole storage battery are also changed. Therefore, it has been difficult for the electricity storage system, in which the characteristics of the storage battery serving as the control target are fixed, to control charge/discharge of the storage battery which is formed with the battery modules having different characteristics.

It is an object of the present invention to provide techniques to dynamically calculate a set value for controlling charge/discharge of a storage battery in accordance with the information obtained from individual battery modules constituting the storage battery.

### [MEANS TO SOLVE THE PROBLEM]

The above described problem is solved by the electricity storage system, the control device and method of the independent claims. Advantageous embodiments are subject to the dependent claims. An electricity storage system according to the invention includes: a storage battery including one or more battery blocks (connected in parallel, wherein each battery block is formed with the two or more battery modules connected in series; a battery controller connected to each battery block (12a, 12b) via a respective communication line; and a charge/discharge controller connected to the storage battery via an electric power line. The battery controller includes a characteristic acquirer that acquires characteristic information representing a physical characteristic of each battery module from each of the plurality of battery modules, and a calculator that calculates a set value for controlling charge/discharge of the storage battery based on the characteristic information of the battery module acquired by the characteristic acquirer, battery configuration information representing a connection form of the plurality of battery modules constituting the storage battery and a fixed value representing the physical characteristic of each battery module. The battery configuration information is information including a parallel number representing the number of the communication lines and a series number representing the number of the battery modules connected to each communication line. The charge/discharge controller controls the charge/discharge of the storage battery based on the set value calculated by the calculator.

According to the invention, in accordance with the information obtained from the individual battery modules constituting the storage battery, the set value for controlling the charge/discharge of the storage battery can be dynamically calculated.

### [BRIEF DESCRIPTION OF THE DRAWINGS]

Fig. 1 is a view schematically showing the entire configuration of an electricity storage system according to an embodiment.
Fig. 2 is a diagram schematically showing a functional configuration of a battery controller according to the embodiment.
Fig. 3 is a flow chart which describes the flow of a calculation process of a set value for controlling the charge/discharge of the storage battery executed by a battery controller according to the embodiment.
Fig. 4 is a flow chart which describes the flow of a calculation process of battery configuration information executed by the battery controller according to the embodiment.

### [MODE FOR CARRYING OUT THE INVENTION]

Hereinafter, an embodiment according to the present invention will be described by using drawings. Physical quantities such as current values and voltage values described below are examples for description and can be appropriately changed depending on specifications, etc. of an electricity storage system. Hereinafter, in all the drawings, similar elements are denoted by the same reference signs, and redundant description will be omitted.

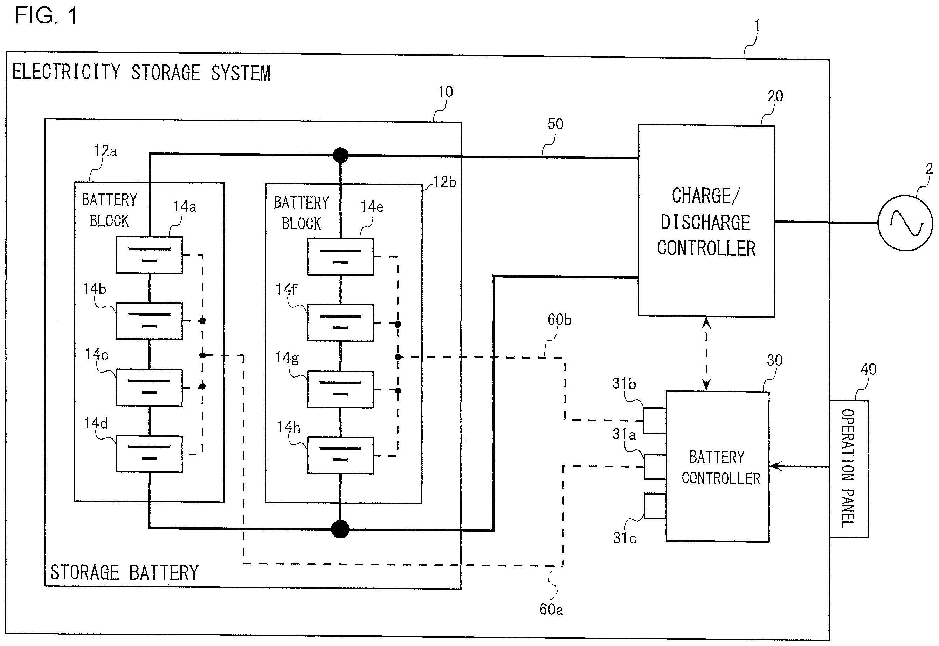

Fig. 1 is a view schematically showing the entire configuration of an electricity storage system 1 according to the embodiment. The electricity storage system 1 includes: a storage battery 10, a charge/discharge controller 20, a battery controller 30, an operation panel 40, an electric power line 50, a first communication line 60a, and a second communication line 60b.

The storage battery 10 includes a first battery block 12a and a second battery block 12b. Hereinafter, except for the case in which the first battery block 12a and the second battery block 12b are particularly distinguished from each other, they are simply collectively referred to as "battery blocks 12". Fig. 1 exemplarily shows a case in which the electricity storage system 1 includes two battery blocks 12. However, the number of the battery blocks 12 is not limited to 2, and it is only required to be formed with one or more battery blocks 12 connected in parallel. Therefore, the number of the battery blocks 12 included in the electricity storage system 1 may be 1, 3, or more.

The first battery block 12a includes a first battery module 14a, a second battery module 14b, a third battery module 14c, and a fourth battery module 14d. Meanwhile, the second battery block 12b includes a fifth battery module 14e, a sixth battery module 14f, a seventh battery module 14g, and an eighth battery module 14h. Hereinafter, except for the case in which the first battery module 14a to the eighth battery module 14h are particularly distinguished from one another, these will be simply collectively referred to as "battery modules 14". Fig. 1 exemplarily shows the case in which each of the first battery block 12a and the second battery block 12b includes four battery modules 14. However, the number of the battery modules 14 included in each battery block is not limited to 4. Each of the battery blocks 12 is only required to be formed with two or more battery modules 14 connected in series.

The battery modules 14 are secondary batteries which can be repeatedly used by charging. Although it is not shown, the battery module 14 is formed, for example, by connecting a plurality of lithium-ion secondary batteries, which are called battery cells, in series and in parallel. The battery module 14 further includes a measure, which measures time-varying physical characteristics such as a current voltage, a charged or discharged current, SOC (State Of Charge; charge quantity), and a temperature of the battery module 14 and includes a transmitter/receiver for transmitting measured values to outside or receiving control signals from outside. This transmitter/receiver is further capable of transmitting time-invariable fixed values, which represent the physical characteristics of the battery module 14, to outside. Details about the fixed values representing the physical characteristics of the battery module 14 will be described later.

Note that the battery cells are not limited to lithium-ion secondary batteries, but may be other secondary batteries. For example, the storage battery may be a nickel-hydrogen battery, a nickel-cadmium battery, or the like.

The battery blocks 12 is an assembled battery formed with the plurality of battery modules 14 connected in series . The storage battery 10 is formed with one or a plurality of battery blocks 12 further connected in parallel. Hereinafter, in the present description, for the sake of convenience for describing, the number of the battery modules 14 provided in the battery block 12 will be described as "series number Ns", and the number of the battery blocks 12 provided in the storage battery 10 will be described as "parallel number Np".

Meanwhile, if the storage battery 10 includes the plurality of battery blocks 12, in other words, if the parallel number Np is 2 or more, there is an assumption that the number of the battery modules 14 provided in each of the battery blocks 12 is the same. Therefore, the total number Nt of the battery modules 14 provided in the storage battery 10 is obtained by the product of the parallel number Np and the series number Ns. Furthermore, if the number of the battery block 12 provided in the storage battery 10 is 1, in other words, even if the plurality of battery blocks 12 are not connected in parallel, this case is described as "the parallel number Np is 1" for the sake of convenience.

The charge/discharge controller 20 is connected via the storage battery 10 and the electric power line 50. The charge/discharge controller 20 controls charge/discharge of the storage battery 10. The charge/discharge controller 20 is formed with a circuit independent from the storage battery 10 and the battery controller 30 and functions as a charge/discharge controlling device of the storage battery 10. Although it is not shown, the charge/discharge controller 20 includes a bidirectional inverter. A direct-current terminal of the bidirectional inverter is electrically connected to the electric power line 50. An alternating-current terminal of the bidirectional inverter is electrically connected to a system power source 2 and a load (not shown) . Note that the system power source 2 is an alternating-current power source supplied by an electric power company.

The bidirectional inverter converts the direct-current power discharged by the storage battery 10 to alternating-current power and outputs that. The bidirectional inverter also converts the alternating-current power, which is from the system power source 2, to direct-current power and outputs that to the electric power line 50. The storage battery 10 is charged by the electric power of the system power source 2 converted to direct-current power by the bidirectional inverter for example during the night time. The electric power stored in the storage battery 10 is converted to alternating-current power by the bidirectional inverter, is supplied to the load, and is utilized as backup electric power in peak-cut of the system power source 2 or in the case of electricity outage of the system power source 2.

The battery controller 30 is connected to each of the battery modules 14 of the first battery block 12a via the first communication line 60a. The battery controller 30 is also connected to each of the battery modules 14 of the second battery block 12b via a second communication line 60b. Hereinafter, except for the case in which the first communication line 60a and the second communication line 60b are particularly distinguished from each other, they will be simply described as "communication lines 60".

In the example shown in Fig. 1, the battery controller 30 connects each battery block 12 via each communication line 60. Therefore, the battery controller 30 includes a first connector 31a, a second connector 31b, and a third connector 31c. Herein, the first connector 31a functions as a first connecting terminal which connects to the first communication line 60a. Similarly, the second connector 31b functions as a second connecting terminal which connects to the second communication line 60b. The third connector 31c is not connected to any of the communication lines 60. Hereinafter, except for the case in which the first connector 31a, the second connector 31b, and the third connector 31c are particularly distinguished from one another, they will be simply described as "connectors 31".

In the example shown in Fig. 1, the number of the communication lines 60 matches the value of the parallel number Np. If the storage battery 10 includes three battery blocks 12 in the example shown in Fig. 1, the third battery block 12 is connected to the battery controller 30 via the third communication line. This communication line is connected to the third connector 31c.

Although details will be described later, the battery controller 30 calculates the set value for controlling charge/discharge of the storage battery 10 and outputs them to the charge/discharge controller 20. The battery controller 30 is formed with a circuit independent from the storage battery 10 and the charge/discharge controller 20 and functions as a control device which calculates the set value for the charge/discharge controller 20 to control the storage battery 10. The charge/discharge controller 20 controls charge/discharge of the storage battery 10 based on the calculated set value calculated by the battery controller 30.

The operation panel 40 is provided on a surface of a chassis (not shown) of the electricity storage system 1. The operation panel 40 is connected to the battery controller 30. The operation panel 40 functions as a user interface for a user to input the information, which is used for calculating the set value for controlling the charge/discharge of the storage battery 10, to the battery controller 30. Note that, instead of the example shown in Fig. 1, the operation panel 40 and the charge/discharge controller 20 may be connected to each other. In this case, the battery controller 30 acquires the information, which is used for calculating the set value for controlling the charge/discharge of the storage battery 10, from the charge/discharge controller 20.

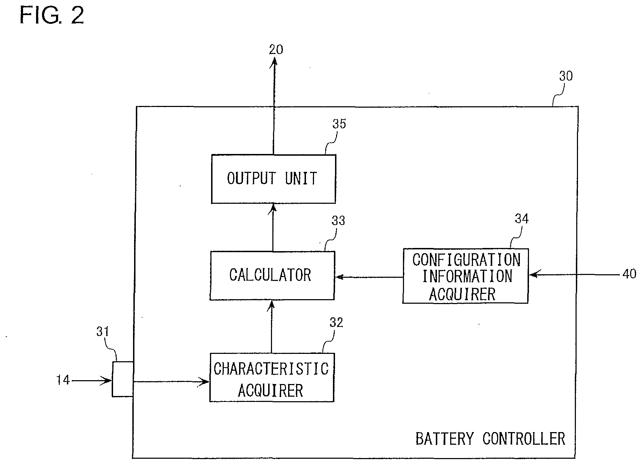

Fig. 2 is a diagram schematically showing a functional configuration of the battery controller 30 according to the embodiment. The battery controller 30 includes a connector 31, a characteristic acquirer 32, a calculator 33, a configuration information acquirer 34, and an output unit 35. Fig. 2 shows the functional configuration for the battery controller 30 according to the embodiment to realize calculations of the set value for controlling the charge/discharge of the storage battery 10, and other configurations are omitted. In Fig. 2, the elements described as functional blocks which carry out various processes can be formed by, in terms of hardware, a CPU (Central Processing Unit), a main memory, and other LSI (Large Scale Integration). Meanwhile, in terms of software, the elements are realized by, for example, a program loaded to the main memory. Therefore, it is understood by those skilled in the art that these functional blocks can be realized in various forms by only hardware, only software, or combinations thereof, and the functional blocks are not limited to any one of them.

The characteristic acquirer 32 acquires physical information, which represents physical characteristics of each of the battery modules 14, from each of the plurality of battery modules 14. Herein, "the physical information, which represents physical characteristics of each of the battery modules 14" includes the measured values of the current physical characteristics of each of the battery modules 14 and the fixed values, which represent the physical characteristics of each of the battery modules 14. The "measured values of the current physical characteristics of the battery module 14" are information such as the current voltage, charged or discharged current, SOC, temperature, etc. of the battery module 14 measured by the above described measure. Meanwhile, the "fixed values, which represent the physical characteristics of the battery module 14" are thresholds for charge/discharge control determined based on the physical characteristics of the battery module 14. Specific examples of the fixed values, which represent the physical characteristics of the battery module 14, include "charge/discharge-end threshold", "overvoltage warning threshold", "overcurrent warning threshold", and "excessive-temperature warning threshold".

The charge/discharge-end threshold includes a charge-stop threshold for preventing the battery module 14 from being overcharged and a discharge-stop threshold for preventing the battery module 14 from overdischarging. The chargeable maximum charge capacity of the battery module 14 is determined by the types and number of the battery cells constituting the battery module 14. Therefore, the charge-stop threshold is defined by using the SOC of the battery module 14 or the voltage of the battery module 14 at that point. Similarly, the discharge-stop threshold is also defined by using the SOC or voltage of the battery module 14. For example, in a case in which the charge/discharge-end threshold is defined by SOC, if the SOC of the battery module 14 exceeds the range which has the charge-stop threshold as an upper limit and has the discharge-stop threshold as a lower limit, the charge/discharge of the battery module 14 has to be stopped.

The overvoltage warning threshold is a threshold for preventing the battery module 14 from having an overvoltage in a case of charging. If the charge voltage of the battery module 14 exceeds the overvoltage warning threshold, the charge to the battery module 14 has to be stopped. Similarly, the overcurrent warning threshold is a threshold for preventing the battery module 14 from having an overcurrent in a case of charging. If the quantity of the current flowing to the battery module 14 exceeds the overcurrent warning threshold, the charge to the battery module 14 has to be stopped.

The excessive temperature warning threshold is a temperature which defines an upper limit of a temperature range in which the battery module 14 is chargeable/dischargeable. If the temperature of the battery module 14 exceeds the excessive-temperature warning threshold, the charge to the battery module 14 has to be stopped. Hereinafter, in the present description, there are assumptions that the plurality of battery modules 14 provided in the storage battery 10 are the batteries manufactured in accordance with the same standards and that all the battery modules have fixed values representing similar physical characteristics.

The calculator 33 calculates the set value, which are for controlling the charge/discharge of the storage battery 10, based on the fixed values of the battery modules 14 acquired by the characteristic acquirer 32. The output unit 35 outputs the set value, which is calculated by the calculator 33, to the charge/discharge controller 20.

As described hereinabove, the battery module 14 is formed by connecting the plurality of battery cells. Therefore, the fixed values representing the physical characteristics provided by the battery modules 14 may be different depending on the number of the battery cells and the battery types of the battery cells. Therefore, for example, if the storage battery 10 is replaced because of, for example, aging, all the battery modules 14 constituting the storage battery 10 are also replaced. It is possible in this process that the compositions of the battery cells constituting the battery modules 14 before the replacement are different from the compositions of the battery cells constituting the battery modules 14 after the replacement. As a result, the fixed values of the battery modules 14 constituting the storage battery 10 before the replacement and the fixed values of the battery modules 14 constituting the storage battery 10 after the replacement may not match.

When the characteristic acquirer 32 dynamically acquires the fixed values, which represent the physical characteristics of each of the battery modules 14, from each of the plurality of battery modules 14, the calculator 33 can calculate an appropriate set value for controlling the charge/discharge of the storage battery 10. From the characteristic information obtained from the individual battery modules 14, the calculator 33 can calculate the set value of the entire storage battery 10 instead of control parameters of the individual battery modules 14 per se.

Since the characteristic acquirer 32 is connected to each of the battery modules 14 included in the storage battery 10, the fixed values of the physical characteristics of each of the battery modules 14 can be acquired. However, even if all the fixed values of the physical characteristics of the battery modules 14 are the same, the values cannot be always directly utilized as the threshold of charge/discharge control of the storage battery 10.

For example, it is assumed that the charge/discharge controller 20 outputs a charge current of 90 [A] to the storage battery 10. If the parallel number Np of the storage battery 10 is 1, the charge current which flows to each of the battery modules 14 included in the storage battery 10 is also 90 [A]. Therefore, in this case, the overcurrent warning threshold of the battery modules 14 can be utilized as a warning threshold of the storage battery 10. On the other hand, if the parallel number Np of the storage battery 10 is 2, the charge current which flows to each of the battery modules 14 included in the storage battery 10 is divided by 2 and becomes 45 [A]. In this case, the overcurrent warning threshold of the battery modules 14 cannot be directly utilized as the warning threshold of the storage battery 10.

Meanwhile, the chargeable capacity of the storage battery 10 is the sum of the maximum charge capacities which are chargeable by the individual battery modules 14. Therefore, the calculator 33 cannot calculate the chargeable capacity of the storage battery 10 only by acquiring the chargeable maximum charge capacity of the individual battery module 14, but further requires the total number of the battery modules 14 provided in the storage battery 10. In this manner, the calculator 33 calculates the set value, which is for controlling the charge/discharge of the storage battery 10, based on battery configuration information of the storage battery 10 in addition to the fixed values representing the physical characteristics of the battery modules 14.

Herein, the "battery configuration information" is the information representing the connection form of the plurality of battery modules 14 constituting the storage battery 10. More specifically, the battery configuration information is the information including the above described parallel number Np and the series number Ns. Therefore, the configuration information acquirer 34 receives input of the battery configuration information from the user via the operation panel 40 and outputs the received battery configuration information to the calculator 33. The calculator 33 acquires the battery configuration information, which has been received by the configuration information acquirer 34.

It is difficult for the charge/discharge controller 20 to individually control the charge/discharge of the individual battery modules 14 constituting the storage battery 10. Therefore, the charge/discharge controller 20 considers the storage battery 10 as one large battery to control the charge/discharge thereof. The set value for controlling the charge/discharge of the storage battery 10 calculated by the calculator 33 is a charge/discharge control threshold for controlling the storage battery 10 as one battery. Therefore, the set value for controlling the charge/discharge of the storage battery 10 corresponds to the fixed values representing the physical characteristics of the battery modules 14, and specific examples thereof include "charge/discharge-end threshold", "overvoltage warning threshold", "overcurrent warning threshold", and "excessive-temperature warning threshold".

As described above, the current obtained by dividing the charge current input to the storage battery 10 by the parallel number Np thereof flows to each of the battery modules 14. Therefore, the calculator 33 calculates the overcurrent warning threshold for controlling the charge/discharge of the storage battery 10 by multiplying the overcurrent warning threshold of the individual battery module 14 by the parallel number Np. Meanwhile, the charge voltage applied to each of the battery modules 14 is the value obtained by dividing the charge voltage applied to the storage battery 10 by the series number Ns. Therefore, the calculator 33 calculates the overvoltage warning threshold for controlling the charge/discharge of the storage battery 10 by multiplying the overvoltage warning threshold of the individual battery module 14 by the series number Ns. The excessive-temperature warning threshold for controlling the charge/discharge of the storage battery 10 may directly utilize the excessive-temperature warning threshold of the individual battery module 14.

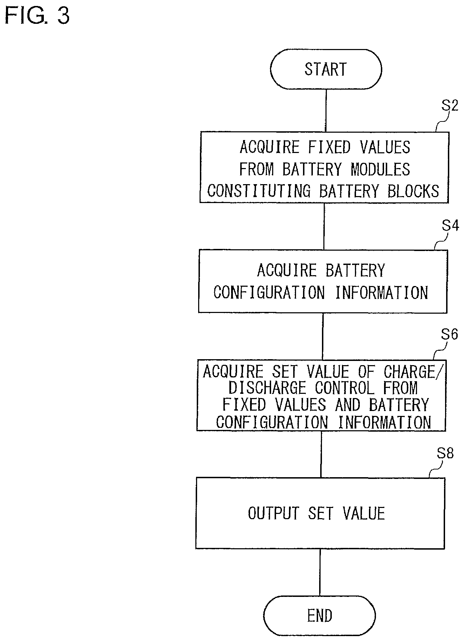

Fig. 3 is a flow chart which describes the flow of a calculation process of the set value for controlling the charge/discharge of the storage battery 10 executed by the battery controller 30 according to the embodiment. The process in the present flow chart starts, for example, when the electricity storage system 1 is activated.

The characteristic acquirer 32 acquires the fixed values representing the physical values, which represent the physical characteristics of each of the battery modules 14, from each of the plurality of battery modules 14 constituting the storage battery 10 (S2). The configuration information acquirer 34 acquires the battery configuration information representing the connection form of the plurality of battery modules 14 constituting the storage battery 10 (S4).

The calculator 33 calculates the set value for controlling the charge/discharge of the storage battery 10 based on the fixed values of the battery modules 14 acquired by the characteristic acquirer 32 and the battery configuration information acquired by the configuration information acquirer 34 (S6). The output unit 35 outputs the set value, which is calculated by the calculator 33 and is for controlling the charge/discharge of the storage battery 10, to the charge/discharge controller 20 (S8). When the output unit 35 outputs the set value to the charge/discharge controller 20, the process of the present flow chart is finished.

As described above, in accordance with the information obtained from the individual battery modules 14 constituting the storage battery 10, the set value for controlling the charge/discharge of the storage battery 10 can be dynamically calculated. By virtue of this, even in a case in which the connection form of the battery modules 14 constituting the storage battery 10 is changed or in a case in which the characteristics of the battery modules 14 per se constituting the storage battery 10 are changed, the set value of the storage battery 10 for controlling the charge/discharge of the storage battery 10 can be automatically calculated. As a result, only the storage battery 10 can be replaced without replacing the electricity storage system 1 per se, and the charge/discharge control of the storage battery 10 can be executed.

Hereinabove, the present invention has been described based on the embodiment. This embodiment is an example, and it can be understood by those skilled in the art that various modifications can be made by the combinations of the constituent elements and processes thereof and that those modifications are also within the scope of the present invention.

### (First Modification)

The above description has described about the case in which the calculator 33 calculates the set value, which is for controlling the charge/discharge of the storage battery 10, based on the fixed values, which represent the physical characteristics of the individual battery modules 14 acquired by the characteristic acquirer 32, and the battery configuration information, which has been acquired by the configuration information acquirer 34 and acquired from the user via the operation panel 40. However, the battery configuration information can be also acquired by deriving by the calculator 33 based on other information without acquiring the battery configuration information from the user. Hereinafter, this case will be described.

As shown in Fig. 1, if the battery controller 30 is connected to each battery block 12 via each communication line 60, the number of the connectors 31 connected to the communication lines 60 matches the parallel number Np. The communication lines 60 are realized, for example, by using optical fibers and communicate with the battery modules 14 by using a predetermined communication protocol. Unique addresses are allocated to the battery modules 14, respectively, and the characteristic acquirer 32 can discriminate the battery modules 14 by using the addresses. Therefore, the characteristic acquirer 32 can specify the number of the battery modules 14 connected to the particular communication lines 60, in other words, the series number Ns by counting the number of the different addresses.

Therefore, the calculator 33 acquires the battery configuration information by acquiring the number of the communication lines 60 as the parallel number Np and acquiring the number of the battery modules 14 connected to each of the communication lines 60 as the series number Ns. By virtue of this, inputting the battery configuration information by the user can be omitted, and usability of the electricity storage system 1 can be improved.

### (Second Modification)

The above described first modification is on the assumption that each battery block 12 is connected via each communication line 60 to the connector 31 of the storage battery 10. In other words, the first modification is on the assumption that the number of the communication lines 60 and the number of the parallel number Np match. However, a case in which the number of the communication lines 60 and the number of the parallel number Np do not match is also possible. For example as shown in Fig. 1, even in the case in which the plurality of battery blocks 12 are connected in parallel, it is conceivable that all of the battery modules 14 included in the battery blocks 12 are connected by the single communication line 60. In such a case, the number of the communication lines 60 and the number of the parallel number Np do not match.

In this case, the calculator 33 utilizes the characteristic information of the battery modules 14 including the measured values of the current physical characteristics of the battery modules 14 in addition to the fixed values representing the physical characteristics of the battery modules 14 acquired by the characteristic acquirer 32 to calculate the battery configuration information. Hereinafter, this case will be described.

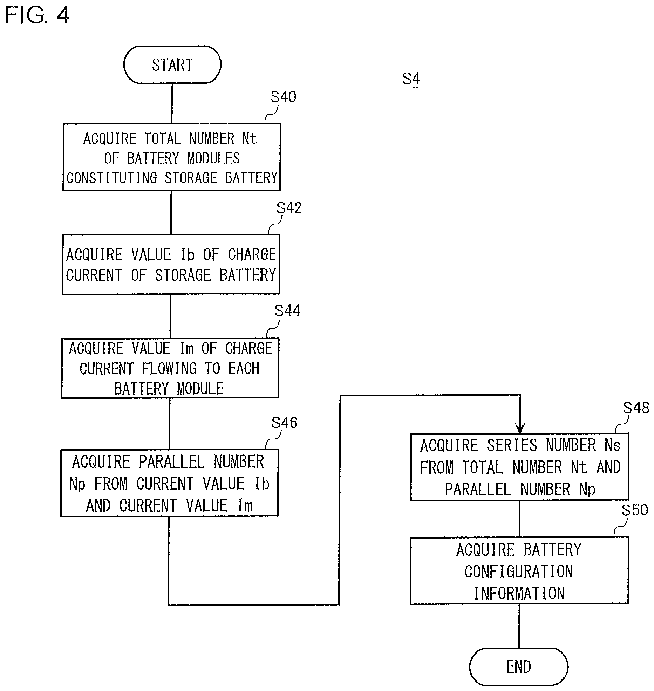

Fig. 4 is a flow chart describing the flow of the calculation process of the battery configuration information executed by the battery controller 30 according to the embodiment and is a chart describing the flow of the process of step S4 of Fig. 3 in more detail.

The characteristic acquirer 32 totals the number of the battery modules 14 connected to the communication lines 60 to acquire the total number Nt of the battery modules 14 constituting the storage battery 10 (S40). This can be realized by counting the number of the different addresses by the characteristic acquirer 32 as described above.

The calculator 33 acquires, from the charge/discharge controller 20, the value Ib of the charge current input to the storage battery 10 (S42). The characteristic acquirer 32 acquires, via the communication line 60, the value Iu of the charge current flowing to each of the battery modules 14 (S44).

The calculator 33 calculates the parallel number Np based on the value Ib of the charge current input to the storage battery 10 by the charge/discharge controller 20 and the value Im of the charge current acquired by the characteristic acquirer 32 and flowing to each of the battery modules 14 (S46). As described above, the charge current Im flowing to each of the battery modules 14 is the value obtained by dividing the value Ib of the charge current input to the storage battery 10 from the charge/discharge controller 20 by the parallel number Np. Therefore, the calculator 33 calculates the parallel number Np by dividing the value Ib of the charge current input to the storage battery 10 by the charge/discharge controller 20 by the value Im of the charge current flowing to each of the battery modules 14.

The calculator 33 calculates the series number Ns based on the calculated parallel number Np and the total number Nt of the battery modules 14 connected to the communication line 60 (S48) . In the storage battery 10 according to the embodiment, the number of the battery modules 14 included in each of the electricity storage blocks is the same. Therefore, the calculator 33 calculates the series number Ns by dividing the total number Nt of the battery modules 14 connected to the communication lines 60 by the parallel number Np. The calculator 33 acquires the battery configuration information including the parallel number Np and the series number Ns (S50). When the calculator 33 acquires the battery configuration information, the process of the present flow chart is finished.

In this manner, according to the electricity storage system 1 according to the second modification, the calculator 33 can calculate the battery configuration information by utilizing the characteristic information of the battery modules 14. By virtue of this, even in a case in which the number of the communication lines 60 and the parallel number Np do not match, for example, when all the battery modules 14 are connected by the single communication line 60, the calculator 33 can automatically acquire the battery configuration information.

Note that the embodiment may be specified by following items.
[Item 1]
   An electricity storage system 1 includes: a storage battery 10 including a plurality of battery modules 14; a battery controller 30 connected to, via a communication line 60, the plurality of battery modules 14 included in the storage battery 10; and a charge/discharge controller 20 connected to the storage battery 10 via an electric power line 50. The battery controller 30 includes: a characteristic acquirer 32 that acquires characteristic information representing a physical characteristic of each battery module 14 from each of the plurality of battery modules 14; and a calculator 33 that calculates a set value for controlling charge/discharge of the storage battery 10 based on the characteristic information of the battery module 14 acquired by the characteristic acquirer 32. The charge/discharge controller 20 controls the charge/discharge of the storage battery 10 based on the set value calculated by the calculator 33.
   By virtue of this, even if the characteristics of the battery modules 14 constituting the storage battery 10 are changed or even if the connection form of the battery modules 14 constituting the storage battery 10 is changed, the set value for controlling the charge/discharge of the storage battery 10 can be dynamically calculated by the calculator 33.
[Item 2]
   The calculator 33 may calculate the set value based on battery configuration information representing a connection form of the plurality of battery modules 14 constituting the storage battery 10 and a fixed value representing the physical characteristic of each battery module 14.
   The calculator 33 can calculate the set value for controlling the charge/discharge of the storage battery 10 by using only the fixed value having a fixed magnitude of value among the characteristic information of the battery module 14 by referencing the battery configuration information.
[Item 3]
   The storage battery 10 is formed with one or more battery blocks 12 connected in parallel, and the battery block 12 is formed with the two or more battery modules 14 connected in series. The battery configuration information is information including a parallel number representing the number of the battery blocks 12 in the storage battery 10 and a series number representing the number of the battery modules 14 included in each battery block 12. The calculator 33 may calculate the set value based on the battery configuration information and the fixed value of each battery module 14.
   By virtue of this, the automatic calculation of the battery configuration information by the calculator 33 can be omitted without troubling the user.
[Item 4]
   A configuration information acquirer 34 that receives input of the battery configuration information may be further provided. The calculator 33 may acquire the battery configuration information received by the configuration information acquirer.
   By virtue of this, the calculation of the battery configuration information by the calculator 33 can be omitted. Since the battery configuration information is manually input by the user, this is effective in a point that the information having higher precision than the battery configuration information acquired by calculating by the calculator 33 can be utilized.
[Item 5]
   The battery controller 30 connects to each battery block 12 via each communication line 60, and the calculator 33 may acquire the battery configuration information by acquiring the number of the communication line 60 as the parallel number and acquiring the number of the battery modules 14 connected to each communication line as the series number.
   By virtue of this, the calculator 33 can automatically acquire the battery configuration information. The necessity of manually inputting the battery configuration information by the user is eliminated. As a result, the usability of the electricity storage system 1 can be improved.
[Item 6]
   The battery controller 30 may connect to the storage battery 10 via the communication line 60 connected to the battery modules 14, and the calculator 33 may acquire the battery configuration information by calculating the parallel number based on a charge current input to the storage battery 10 and a charge current flowing to each battery module 14 and calculating the series number based on the parallel number and the number of the battery modules 14 connected to the communication line 60.
   By virtue of this, even in a case in which, for example, all the battery modules 14 are connected to the single communication line 60, the calculator 33 can automatically acquire the battery configuration information. The necessity of manually inputting the battery configuration information by the user is eliminated.
[Item 7]
   A control device 30 includes: a connector 31 connected to a communication line 60 connected to a storage battery 10 including a plurality of battery modules 14; a characteristic acquirer 32 that acquires characteristic information representing a physical characteristic of each battery module 14 via the communication line 60 from each of the plurality of battery modules 14; a calculator 33 that calculates a set value for controlling charge/discharge of the storage battery 10 based on the characteristic information of each battery module 14 acquired by the characteristic acquirer 32; and an output unit 35 that outputs the set value calculated by the calculator 33 to a charge/discharge controlling device 20 that controls the charge/discharge of the storage battery 10.
   By virtue of this, even if the characteristics of the battery modules 14 constituting the storage battery 10 are changed or even if the connection form of the battery modules 14 constituting the storage battery 10 is changed, the set value of the storage battery 10 for controlling the charge/discharge of the storage battery 10 can be dynamically calculated by the calculator 33.
[Item 8]
   The calculator 33 may calculate the set value based on battery configuration information representing a connection form of the plurality of battery modules 14 constituting the storage battery 10 and a fixed value representing the physical characteristic of each battery module 14.
   The calculator 33 can calculate the set value for controlling the charge/discharge of the storage battery 10 by using only the fixed value having a fixed magnitude of value among the characteristic information of the battery module 14 by referencing the battery configuration information.
[Item 9]
   A control method of a storage battery 10 including a plurality of battery modules 14 includes: a step of acquiring characteristic information representing a physical characteristic of each battery module 14 from each of the plurality of battery modules 14; a step of calculating a set value for controlling charge/discharge of the storage battery 10 based on the acquired characteristic information of each battery module 14; and a step of controlling the charge/discharge of the storage battery 10 based on the calculated set value.
   By virtue of this, even if the characteristics of the battery modules 14 constituting the storage battery 10 are changed or even if the connection form of the battery modules 14 constituting the storage battery 10 is changed, the set value for controlling the charge/discharge of the storage battery 10 can be dynamically calculated, and the charge/discharge of the storage battery 10 formed with the battery modules 14 having different characteristics can be controlled.
[Item 10]
   A control program of a storage battery 10 including a plurality of battery modules 14 causes a computer to execute: a process of acquiring characteristic information representing a physical characteristic of each battery module 14 from each of the plurality of battery modules 14; a process of calculating a set value for controlling charge/discharge of the storage battery 10 based on the acquired characteristic information of each battery module 14; and a process of controlling the charge/discharge of the storage battery 10 based on the calculated set value.
   By virtue of this, even if the characteristics of the battery modules 14 constituting the storage battery 10 are changed or even if the connection form of the battery modules 14 constituting the storage battery 10 is changed, the set value for controlling the charge/discharge of the storage battery 10 can be dynamically calculated, and the charge/discharge of the storage battery 10 formed with the battery modules 14 having different characteristics can be controlled.

### [DESCRIPTION OF THE REFERENCE NUMERALS]

1 electricity storage system, 2 system power source, 10 storage battery, 12 battery block, 14 battery module, 20 charge/discharge controller, 30 battery controller, 31 connector, 32 characteristic acquirer, 33 calculator, 34 configuration information acquirer, 35 output unit, 40 operation panel, 50 electric power line, 60 communication line.

### [INDUSTRIAL APPLICABILITY]

The present invention can be utilized in an electricity storage system including a plurality of battery modules.

## Claims

1. A control device (30) including:
a plurality of connectors (31a, 31b, 31c) connected to a storage battery (10) including a plurality of battery blocks (12a, 12b) connected in parallel, wherein each battery block (12a, 12b) is formed with the two or more battery modules (14a, 14b, ..., 14h) connected in series and wherein each connector (31a, 31b, 31c) is connected to a respective one of the battery blocks (12a, 12b) via a respective communication line (60a, 60b);
a characteristic acquirer (32) configured to acquire characteristic information representing a physical characteristic of each of the plurality of battery modules (14a, 14b, ..., 14h);
a calculator (33) configured to calculate a set value for controlling charge/discharge of the storage battery (10) based on the characteristic information of each battery module (14a, 14b, ..., 14h) acquired by the characteristic acquirer (32), battery configuration information representing a connection form of the plurality of battery modules (14a, 14b, ..., 14h) constituting the storage battery (10) and a fixed value representing the physical characteristic of each battery module (14a, 14b, ..., 14h), wherein the battery configuration information is information including a parallel number representing the number of the communication lines (60a, 60b) and a series number representing the number of the battery modules (14a, 14b, ..., 14h) connected to each communication line (60a, 60b); and
an output unit that outputs the set value calculated by the calculator (33) to a charge/discharge controller (20) that controls the charge/discharge of the storage battery (10).

2. An electricity storage system (1) including:
a storage battery (10) including a plurality of battery blocks (12a, 12b) connected in parallel, wherein each battery block (12a, 12b) is formed with two or more battery modules (14a, 14b, ..., 14h) connected in series;
a battery controller (30) connected to each battery block (12a, 12b) via a respective communication line (60a, 60b); and
a charge/discharge controller (20) connected to the storage battery (10) via an electric power line (50),
wherein the battery controller (30) is a control device according to claim 1.

3. A control method for a storage battery (10) including a plurality of battery blocks (12a, 12b) connected in parallel, wherein each battery block (12a, 12b) is formed with two or more battery modules (14a, 14b, ..., 14h) connected in series, the control method including the following steps performed by a control device (30) comprising a plurality of connectors (31a, 31b, 31c), each of the is connected to a respective one of the battery blocks (12a, 12b) via a respective communication line (60a, 60b):
acquiring characteristic information representing a physical characteristic of each of the plurality of battery modules (14a, 14b, ..., 14h);
calculating a set value for controlling charge/discharge of the storage battery (10) based on the acquired characteristic information of each battery module (14a, 14b, ..., 14h) ), battery configuration information representing a connection form of the plurality of battery modules (14a, 14b, ..., 14h) constituting the storage battery (10) and a fixed value representing the physical characteristic of each battery module (14a, 14b, ..., 14h), wherein the battery configuration information is information including a parallel number representing the number of the communication lines (60a, 60b) and a series number representing the number of the battery modules (14a, 14b, ..., 14h) connected to each communication line (60a, 60b); and
controlling the charge/discharge of the storage battery (10) based on the calculated set value.

## Patentansprüche

1. Steuerungsvorrichtung (30), aufweisend:
mehrere Steckverbinder (31a, 31b, 31c), die mit einer Speicherbatterie (10) verbunden sind, die mehrere Batterieblöcke (12a, 12b) enthält, die parallel geschaltet sind, wobei jeder Batterieblock (12a, 12b) mit zwei oder mehreren Batteriemodulen (14a, 14b,..., 14h) gebildet ist, die in Serie geschaltet sind, und wobei jeder Steckverbinder (31a, 31b, 31c) über eine entsprechende Kommunikationsleitung (60a, 60b) mit einem entsprechenden der Batterieblöcke (12a, 12b) verbunden ist;
einen Charakteristikerfasser (32), der dafür ausgelegt ist, Charakteristikinformationen aufzunehmen, die eine physikalische Charakteristik jedes der mehreren Batteriemodule (14a, 14b,...., 14h) angeben;
ein Rechner (33), der dafür ausgelegt ist, einen Einstellwert zum Steuern des Ladens/Entladens der Speicherbatterie (10) zu berechnen, basierend auf den Charakteristikinformationen jedes Batteriemoduls (14a, 14b,..., 14h), die von dem Charakteristikerfasser (32) erfasst sind, Batteriekonfigurationsinformationen, die eine Verbindungsform der mehreren Batteriemodule (14a, 14b,..., 14h) angeben, die die Speicherbatterie (10) bilden, und auf einem Einstellwert, der die physikalische Charakteristik jedes Batteriemoduls (14a, 14b,..., 14h) angibt, wobei die Batteriekonfigurationsinformationen Informationen, die eine Parallelanzahl, die die Anzahl der Kommunikationsleitungen (60a, 60b) angibt, und eine Seriellanzahl, die die Anzahl der Batteriemodule (14a, 14b,..., 14h) angibt, die an jede Kommunikationsleitung (60a, 60b) angeschlossen sind, beinhalten; und
eine Ausgabeeinheit, die den von dem Rechner (33) berechneten Einstellwert an eine Lade-/ Entladesteuerungsvorrichtung (20) ausgibt, die das Laden/Entladen der Speicherbatterie (10) steuert.

2. Elektrisches Speichersystem (1), aufweisend:
eine Speicherbatterie (10), die mehrere Batterieblöcke (12a, 12b) enthält, die parallel geschaltet sind, wobei jeder Batterieblock (12a, 12b) mit zwei oder mehreren Batteriemodulen (14a, 14b,...., 14h), die in Serie geschaltet sind, gebildet ist;
eine Batteriesteuerungsvorrichtung (30), die über eine entsprechende Kommunikationsleitung (60a, 60b) mit jedem Batterieblock (12a, 12b) verbunden ist; und
eine Lade-/Entladesteuerungsvorrichtung (20), die über eine elektrische Stromleitung (50) mit der Speicherbatterie (10) verbunden ist,
wobei die Batteriesteuerungsvorrichtung (30) eine Steuerungsvorrichtung nach Anspruch 1 ist.

3. Steuerungsverfahren für eine Speicherbatterie (10), die mehrere parallel geschaltete Batterieblöcke (12a, 12b) aufweist, wobei jeder Batterieblock (12a, 12b) mit zwei oder mehreren Batteriemodulen (14a, 14b,..., 14h) gebildet ist, die in Serie geschaltet sind, wobei das Steuerungsverfahren die folgenden Schritte umfasst, die von einer Steuerungsvorrichtung (30) durchgeführt werden, die mehrere Steckverbindern (31a, 31b, 31c) aufweist, von denen jeder über eine entsprechende Kommunikationsleitung (60a, 60b) mit einem entsprechenden Batterieblock (12a, 12b) verbunden ist:
Erfassen von Charakteristikinformationen, die eine physikalische Charakteristik jedes der mehreren Batteriemodule (14a, 14b,...., 14h) angeben;
Berechnen eines Einstellwerts zum Steuern des Ladens/Entladens der Speicherbatterie (10) basierend auf den erfassten Charakteristikinformationen jedes Batteriemoduls (14a, 14b,..., 14h)), Batteriekonfigurationsinformationen, die eine Verbindungsform der mehreren Batteriemodule (14a, 14b,..., 14h), die die Speicherbatterie (10) bilden, angeben, und auf einem Einstellwert, der die physikalische Charakteristik jedes Batteriemoduls (14a, 14b, 14b,..., 14h) angibt, wobei die Batteriekonfigurationsinformationen Informationen beinhalten, die eine Parallelanzahl, die die Anzahl der Kommunikationsleitungen (60a, 60b) angibt, und eine Seriellanzahl, die die Anzahl der Batteriemodule (14a, 14b,..., 14h) angibt, die mit jeder Kommunikationsleitung (60a, 60b) verbunden sind; und
Steuern des Ladens/Entladens der Speicherbatterie (10) basierend auf dem berechneten Einstellwert.

## Revendications

1. Dispositif de commande (30) comprenant :
une pluralité de connecteurs (31a, 31b, 31c) connectés à une batterie d'accumulation (10) comprenant une pluralité de blocs de batterie (12a, 12b) connectés en parallèle, dans lequel chaque bloc de batterie (12a, 12b) est formé par deux modules de batterie (14a, 14b, ..., 14h) ou plus connectés en série et dans lequel chaque connecteur (31a, 31b, 31c) est connecté à l'un respectif des blocs de batterie (12a, 12b) par l'intermédiaire d'une ligne de communication (60a, 60b) respective ;
un dispositif d'acquisition de caractéristique (32) configuré pour acquérir des informations de caractéristique représentant une caractéristique physique de chacun de la pluralité de modules de batterie (14a, 14b, ..., 14h) ;
un calculateur (33) configuré pour calculer une valeur établie pour commander la charge/décharge de la batterie d'accumulation (10) sur la base des informations de caractéristique de chaque module de batterie (14a, 14b, ..., 14h) acquises par le dispositif d'acquisition de caractéristique (32), d'informations de configuration de batterie représentant une forme de connexion de la pluralité de modules de batterie (14a, 14b, ..., 14h) constituant la batterie d'accumulation (10) et d'une valeur fixe représentant la caractéristique physique de chaque module de batterie (14a, 14b, ..., 14h), dans lequel les informations de configuration de batterie sont des informations comprenant un nombre parallèle représentant le nombre des lignes de communication (60a, 60b) et un nombre série représentant le nombre des modules de batterie (14a, 14b, ..., 14h) connectés à chaque ligne de communication (60a, 60b) ; et
une unité de sortie qui délivre la valeur établie calculée par le calculateur (33) à un contrôleur de charge/décharge (20) qui commande la charge/décharge de la batterie d'accumulation (10).

2. Système d'accumulation d'électricité (1) comprenant :
une batterie d'accumulation (10) comprenant une pluralité de blocs de batterie (12a, 12b) connectés en parallèle, dans lequel chaque bloc de batterie (12a, 12b) est formé par deux modules de batterie (14a, 14b, ..., 14h) ou plus connectés en série ;
un contrôleur de batterie (30) connecté à chaque bloc de batterie (12a, 12b) par l'intermédiaire d'une ligne de communication (60a, 60b) respective ; et
un contrôleur de charge/décharge (20) connecté à la batterie d'accumulation (10) par l'intermédiaire d'une ligne d'alimentation électrique (50),
dans lequel le contrôleur de batterie (30) est un dispositif de commande selon la revendication 1.

3. Procédé de commande pour une batterie d'accumulation (10) comprenant une pluralité de blocs de batterie (12a, 12b) connectés en parallèle, dans lequel chaque bloc de batterie (12a, 12b) est formé par deux modules de batterie (14a, 14b, ..., 14h) ou plus connectés en série, le procédé de commande comprenant les étapes suivantes effectuées par un dispositif de commande (30) comprenant une pluralité de connecteurs (31a, 31b, 31c), chacun d'eux étant connecté à l'un respectif des blocs de batterie (12a, 12b) par l'intermédiaire d'une ligne de communication (60a, 60b) respective :
d'acquisition d'informations de caractéristique représentant une caractéristique physique de chacun de la pluralité de modules de batterie (14a, 14b, ..., 14h) ;
de calcul d'une valeur établie pour commander la charge/décharge de la batterie d'accumulation (10) sur la base des informations de caractéristique acquises de chaque module de batterie (14a, 14b, ..., 14h), d'informations de configuration de batterie représentant une forme de connexion de la pluralité de modules de batterie (14a, 14b, ..., 14h) constituant la batterie d'accumulation (10) et d'une valeur fixe représentant la caractéristique physique de chaque module de batterie (14a, 14b, ..., 14h), dans lequel les informations de configuration de batterie sont des informations comprenant un nombre parallèle représentant le nombre des lignes de communication (60a, 60b) et un numéro série représentant le nombre des modules de batterie (14a, 14b, ..., 14h) connectés à chaque ligne de communication (60a, 60b) ; et
de commande de la charge/décharge de la batterie d'accumulation (10) sur la base de la valeur établie calculée.
